# EUROPEAN PATENT APPLICATION

(11) **EP 1 435 370 A1**
(43) Date of publication of application: **07.07.2004**
(21) Application number: 02801514.7
(22) Date of filing: 09.10.2002
(51) Int. Cl.: C08J 7/04, C09D 191/06, C09D 5/02, C09D 133/06, C09D 175/06

(54) **COATING MATERIAL COMPOSITION**

(30) Priority: 10.10.2001 JP 2001312425
(71) Applicant: Rinrei Wax Co., Ltd., Tokyo 104-0061 (JP); Honda Giken Kogyo Kabushiki Kaisha, Minato-ku, Tokyo 107-0062 (JP)
(72) Inventor: KIRIYA, Noboru, c/o Rinrei Wax Co., Ltd., Hadano-shi, Kanagawa 257-0031 (JP); YAMASHITA, Kenji, c/o Rinrei Wax Co., Ltd., Hadano-shi, Kanagawa 257-0031 (JP); KATO, Kaoru, c/o Honda Giken Kogyo K. K., Tokyo 107-0062 (JP); TOJO, Hideaki, c/o Honda Giken Kogyo K. K., Tokyo 107-0062 (JP)
(74) Representative: Eddowes, Simon
(86) International application number: PCT/JP2002/010467
(87) International publication number: WO 2003/033578

(57) **Abstract**

To provide a coating material composition which is capable of forming a coating film that restores the surface of an organic structural member provided for the interior or exterior of a mobile body or a stationary article such as a furnished household equipment to almost its initial good-looking appearance and protects the surface thereof to keep its good-looking appearance. There is provided a coating material composition used for an organic structural member provided for the interior or exterior decoration of an article, including:
(a) an emulsion of an acrylic copolymer;
(b) an aqueous urethane resin;
(c) a wax emulsion;
(d) an alkaline soluble resin; and
(e) an ultraviolet-ray absorbent,
in which the components (a), (b), (c), (d), and (e) are provided as effective components.

## Description

### BACKGROUND OF THE INVENTION

### 1. Field of the Invention

The present invention relates to a coating material composition which can be applied on an organic structural member used for the interior or for the exterior of a mobile body such as an automobile or a stationary article such as a furnished household equipment to restore a flawed surface thereof to almost its original condition or to protect the surface of the organic structural member from wearing and tearing to keep its good-looking appearance.

### 2. Description of the Related Art

Heretofore, organic structural members have been heavily used for interior and exterior decorations of automobiles, such as roofs, sidewalls, protective moldings around the respective doors, tires, and interior dashboards thereof. Likewise, they have been heavily used for interior and exterior decorations of other mobile bodies such as two-wheeled vehicles, buggy vehicles with the option of low-pressure tires, bicycles, construction machines such as power shovels, agricultural machines such as farm tractors, railroad vehicles, monorail vehicles, aerial cableway vehicles, playground equipments of amusement parks, canoes, yachts, ships, submarines, rockets, airplanes, helicopters, airships, aerostats, hang gliders, gliders, elevators, and escalators, and furthermore interior and exterior decorations of furnishings such as, furnished household equipments, and personal items, including chests, tables, fireplaces, and so on which are arranged in rooms and used daily.

In general, raw material resins of the respective organic structural members described above may include polyvinyl chloride (PVC), polypropylene (PP), ethylene propylene rubber (EPDM), polyethylene (PE), polystyrene (PS), acrylonitrile-butadiene-styrene (ABS), acrylic resin, and so on.

It has been known that these organic structural members tend to deteriorate with passage of time. In other words, each organic structural member suffers a whitening effect by acid rain, ultraviolet light (UV), and so on and also suf fers wearing and tearing, resulting in impairment of its initial good-looking appearance. When the organic structural member (e.g., the molding of an automobile) has suffered from such a damage, for example, it is generally restored by grinding the surface thereof or by applying a polishing agent such as a silicone oil or a silicone resin on the surface thereof.

The process of restoring the damaged organic structural member by grinding the surface thereof may restore an irregularity of the surface thereof caused by wearing and tearing to its original state. However, there is a problem that the above process cannot restore the whitened surface thereof caused by acid rain, UV, and so on.

In addition, there is another problem that the polishing agent that includes as amain component a silicone oil puts anoily-reflected gloss on the surface of the organic structural member and it can be visually undesirable. Furthermore, as the polishing agent is typically in a liquid form, it is difficult to obtain a desired thickness of the resulting coating even though the polishing agent is applied repeatedly on the surface of the organic structural member. Thus, there is a further problem that the irregularity of the surface of the target member caused by wearing and tearing is hardly restored with satisfaction.

The polishing agent that includes as a main component a silicone resin is different from the liquid silicon-oil type in that a solid film can be coated on the surface of the organic structural member. However, it is a water-insoluble material. Therefore, the irregularity of the surface caused by wearing and tearing can hardly be restored with satisfaction because of a poor recoatability (property of repeated coating) of such a polishing agent.

The present inventors have been dedicated to the study of restoring a deteriorated organic structural member which has been whitened by acid rain, UV, or the like or which has been damaged by wearing and tearing to almost an initial good-looking appearance and relieving the whitening effect. Finally, the present invention has been completed in that an aqueous resin coating agent prepared using an acrylic emulsion, urethane dispersion, or the like as a primary raw material relieves a whitening effect on the surface of the organic structural member while having an excellent recoatability.

### SUMMARY OF THE INVENTION

It is an object of the present invention to provide a coating material composition which is capable of forming a coating film that restores the surface of an organic structural member to almost its initial good-looking appearance andprotects the surface thereof to keep its good-looking appearance.

In order to attain the above-mentioned object, according to a first aspect of the present invention, there is provided a coating material composition used for an organic structural member provided for the interior or exterior decoration of an article, including:
(a) an emulsion of an acrylic copolymer;
(b) an aqueous urethane resin;
(c) a wax emulsion;
(d) an alkaline soluble resin; and
(e) an ultraviolet-ray absorbent,
in which the components (a), (b), (c), (d), and (e) are provided as effective components.

According to a second aspect of the present invention, there is provided a coating material composition described in the first aspect, in which the aqueous urethane resin (the component (b)) is an urethane dispersion.

According to a third aspect of the present invention, there is provided a coating material composition described in the second aspect, in which the urethane dispersion is aliphatic polyester urethane.

According to a fourth aspect of the present invention, there is provided a coating material composition described in the first, second, or third aspect, further including: a flatting agent for fitting a gloss of a coating film to a gloss of the organic structural member.

According to a fifth aspect of the present invention, it is characterized in that the article described in the first, second, third, or fourth aspect is a mobile body.

According to a sixth aspect of the present invention, it is characterized in that the article described in the first, second, third, or fourth aspect is a furnished household equipment.

Accordingly, the coating material composition of the present invention to be used for an organic structural member in the interior or on the exterior of a mobile body or a stationary article such as a furnished household equipment is capable of restoring the surface of an organic structural member to almost its initial good-looking appearance and forming a coating film that protects the surface thereof to keep its good-looking appearance by applying such a coating agent on the surface of the organic structural member which has been whitened by acid rain, UV, or the like or which has been damaged by wearing and tearing to relieve a whitening effect on the surface of the organic structural member or sufficiently restore the irregularity of the surface thereof to almost its original condition by repeatedly coating it while protecting and keeping the good-looking appearance of the surface thereof.

In the case where the above-mentioned aqueous urethane resin is an urethane dispersion, the resulting coating film has coating characteristics that are excellent in breaking strength, heat resistance, solvent resistance, light resistance, and so on while having excellent leveling and extensibility. Therefore, the coating film excels in touching up the surface flaws of the organic structural member and also excels in resistance to wearing and tearing. Consequently, the surface of the organic structural member can be protected and kept in good-looking appearance more strongly.

In the case where the urethane in the urethane dispersion is aliphatic polyester urethane, the resulting coating film has coating characteristics that are particularly excellent in breaking strength. Therefore, the coating film can be more excellent in the resistance to wearing and tearing and thus the surface of the organic structural member can be protected and kept in good-looking appearance more strongly.

Furthermore, such a flatting agent may be added in the coating material composition for fitting the gloss of an organic structural member to that of the raw material of the organic structural member. In other words, such a flatting agent allows the organic structural member to be restored to a condition more close to its original gloss (i.e., to an original degree of gloss or to a dull state).

### DESCRIPTION OF THE PREFERRED EMBODIMENTS

Hereinafter, preferred embodiments of a coating material composition in accordance with the present invention will be described below. As already mentioned, such a coating material composition can be used for an organic structural member provided for the interior or exterior decoration of a mobile body or a stationary article such as a furnished household equipment.

The present invention relates to a coatingmaterial composition used for an organic structural member provided for the interior or exterior decoration of a mobile body or a stationary article such as a furnished household equipment, including:
(a) an emulsion of an acrylic copolymer;
(b) an aqueous urethane resin;
(c) a wax emulsion;
(d) an alkaline soluble resin; and
(e) an ultraviolet-ray absorbent,
wherein the components (a), (b), (c), (d), and (e) are provided as effective components.

Also, the coating material composition may additionally include a flatting agent for fitting a gloss of the resulting coating film to a gloss of the raw material of the organic structural member described above.

The above-mentioned emulsion of the acrylic copolymer may be a copolymer of: one acrylic ester or two or more acrylic esters selected from the group of methyl acrylate, ethyl acrylate, n-propyl acrylate, isopropyl acrylate, n-butyl acrylate, isobutyl acrylate, and 2-ethylhexyl acrylate, and so on; and/or one methacrylic acid ester or two or more methacrylic acid esters selected from the group of methyl methacrylate, ethyl methacrylate, n-propyl methacrylate, isopropyl methacrylate, n-butyl methacrylate, isobutyl methacrylate, 2-ethylhexyl methacrylate, stearyl methacrylate, lauryl methacrylate, and so on. Alternatively, the above-mentioned emulsion of the acrylic copolymer may be a copolymer of: one or more compounds described above; and styrene, acrylonitrile, methacrylonitrile, vinyl chloride, vinylidene chloride, vinyl acetate, vinyl ethers such as methyl vinyl ether, n-propyl vinyl ether, isopropyl vinyl ether, n-butyl vinyl ether, and isobutyl vinyl ether, one vinyl monomer or two vinyl monomers, which can be co-polymerizable with the above-mentioned acrylic ester and/or methacrylic acid ester, selected from carboxyl group-containing vinyl monomers such as acrylic acid, methacrylic acid, itaconic acid, citraconic acid, and crotonic acid, hydroxyl group-containing vinyl monomers such as β-hydroxy ethyl acrylate, β-hydroxy ethyl methacrylate, β-hydroxy propyl acrylate, β-hydroxy propyl methacrylate, allyl alcohol, N-methylol acrylamide, and N-methylol methacrylamide, and epoxy group-containing vinyl monomers such as glycidyl acrylate, glydcidyl methacrylate and glycidyl allyl ether. Here, the acrylic copolymer may be generally provided as an emulsion of 30% to 60% copolymer described above.

The aqueous urethane resin described above may be an aqueous colloidal dispersion, emulsion, or the like of an urethane resin generated from aromatic, aliphatic, or alicyclic isocyanate, and polyester, polycarbonate, or polyether polyol. Particularly, among them, it is preferable that the aqueous urethane resin is an urethane dispersion in terms of touching up surface flaws and also in terms of resistance to wearing and tearing. Among them, furthermore, from the viewpoint of the resistance to wearing and tearing, the urethane provided in the form of urethane dispersion is preferably aliphatic polyester urethane.

The wax emulsion described above may be one obtained by emulsifying and dispersing wax selected from the group of: vegetable wax such as candelilla wax, carnauba wax, rice wax, and sumac wax; animal wax such as bees wax, lanolin, and whale wax; mineral wax such as montan wax, ozokerite, and ceresin; petroleum wax such as paraffin wax, microcrystalline wax, and petrolatum; synthetic hydrocarbon wax such as Fischer-Tropsch wax, polyethylene oxide wax, polyethylene wax, and acryl/ethylene copolymer wax; modified wax such as montan wax derivative, paraffin wax derivative, microcrystalline wax derivative, and hydrogenated castor oil.

The alkali-soluble resin described above may be an aqueous alkali solution such as an aqueous ammonia solution of a styrene/maleic acid copolymer or a resin such as acryl oligomer or rosin.

The UV absorbent described above may be selected from the group of benzophenones including 2,4-dihydroxy benzophenone, 2-hydroxy-4-methoxy benzophenone, 2-hydroxy-4-methoxy benzophenone 5-sulufonic acid, 2-hydroxy-4-n-octoxy benzophenone, 2-hydroxy-4-n-dodecyloxy benzophenone, 2-hydroxy-4-benzyloxy benzophenone, 2,2'-dihydroxy-4-methoxy benzophenone, 2,2',4,4'-tetrahydroxy benzophenone, 2,2'-dihydroxy-4,4'-dimethoxy benzophenone, and so on; benzotriazoles including 2-(2'-hydroxy-5'-methylphenyl)-benzotriazole, 2-(2'-hydroxy-3',5'-di-t-butylphenyl)-5-chloro-benzotriazole, 2-(2'-hydroxy-3'-t-butyl-5'-methylphenyl)-5-chloro-benzotriazo le, 2-(2'-hydroxy-3',5'-di-t-amylphenyl)-benzotriazole, 2-(2'-hydroxy-3',5'-di-t-butylphenyl)-benzotriazole, 2-(2'-hydroxy-5'-t-butylphenyl)-benzotriazole, 2-(2'-hydroxy-5'-t-octylphenyl)-benzotriazole, 2,4-di-t-butylphenyl-3', 5'-di-t-butyl 4'-hydroxybenzoate, and so on; reactive UV absorbents in which an methacryloyl group is introduced into a benzotriazole skeleton (e.g., "RUVA-93" manufactured by Otsuka Chemical, Co., Ltd.); and so on.

The flatting agent described above may be selected from inorganic materials as typified by, for example, white carbon and organic materials as typified by, for example, polyethylene resin.

The above-mentioned coating material composition may further include another additional agent such as an antiseptic agent or an antifoaming agent if required.

### [Examples]

Hereinafter, but not limited to, the characteristics of the present invention will be illustrated on the basis of the examples and the comparative examples of the present invention.

### Examples 1 to 4 and Comparative Examples 1 to 5

Coating material compositions having different formulations as shown in Table 1 (for Examples) and Table 2 (for Comparative Examples) were prepared, respectively. Each of the obtained compositions (hereinafter, simply referred to as a sample) were subjected to evaluations for the properties of touching up the surface flaws, recoatability, adhesiveness, accelerated weatherability, and scratch-proof, respectively. In the tables, the results are numerically represented in percent by weight.

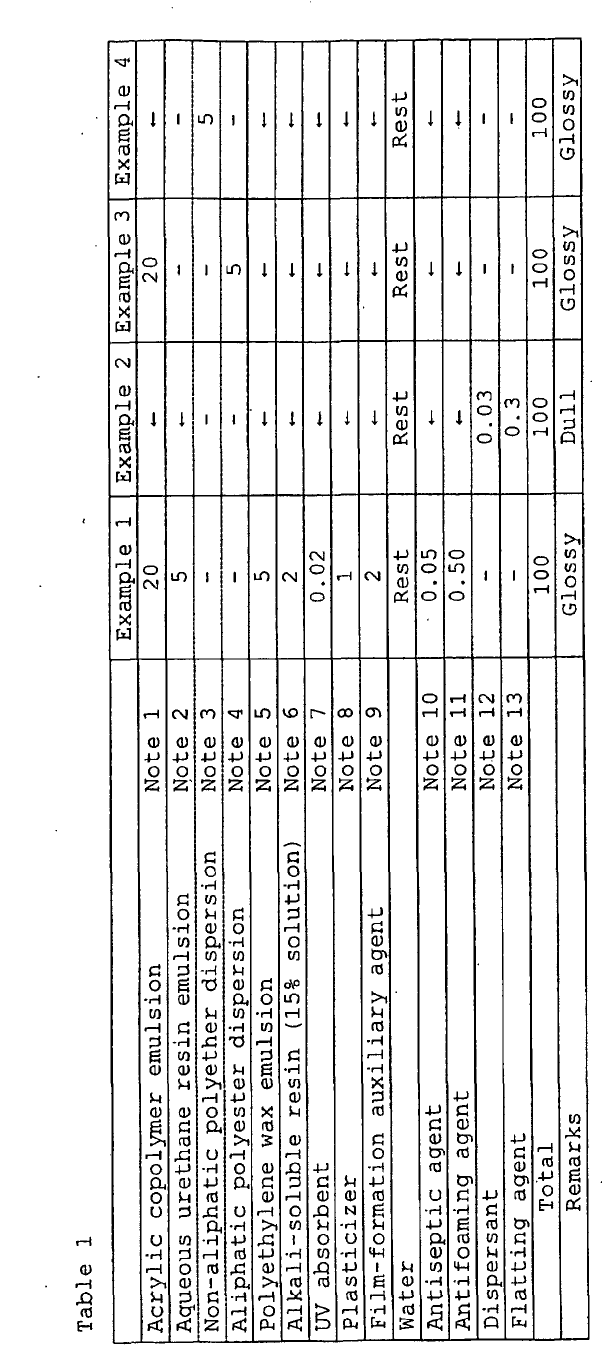

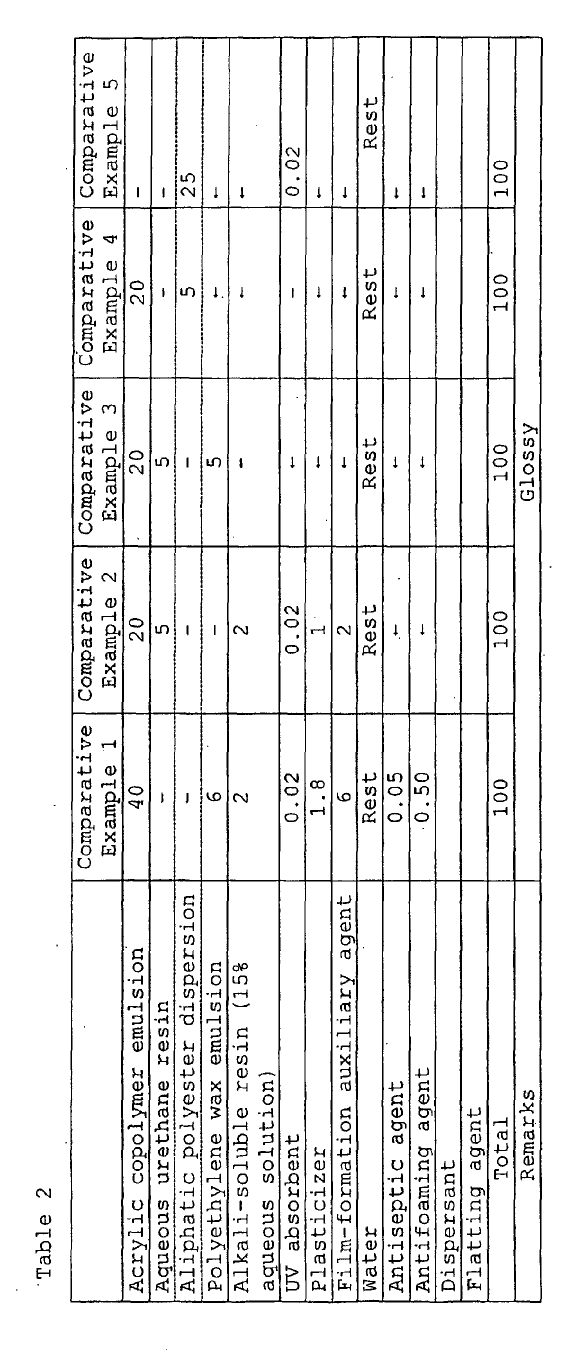

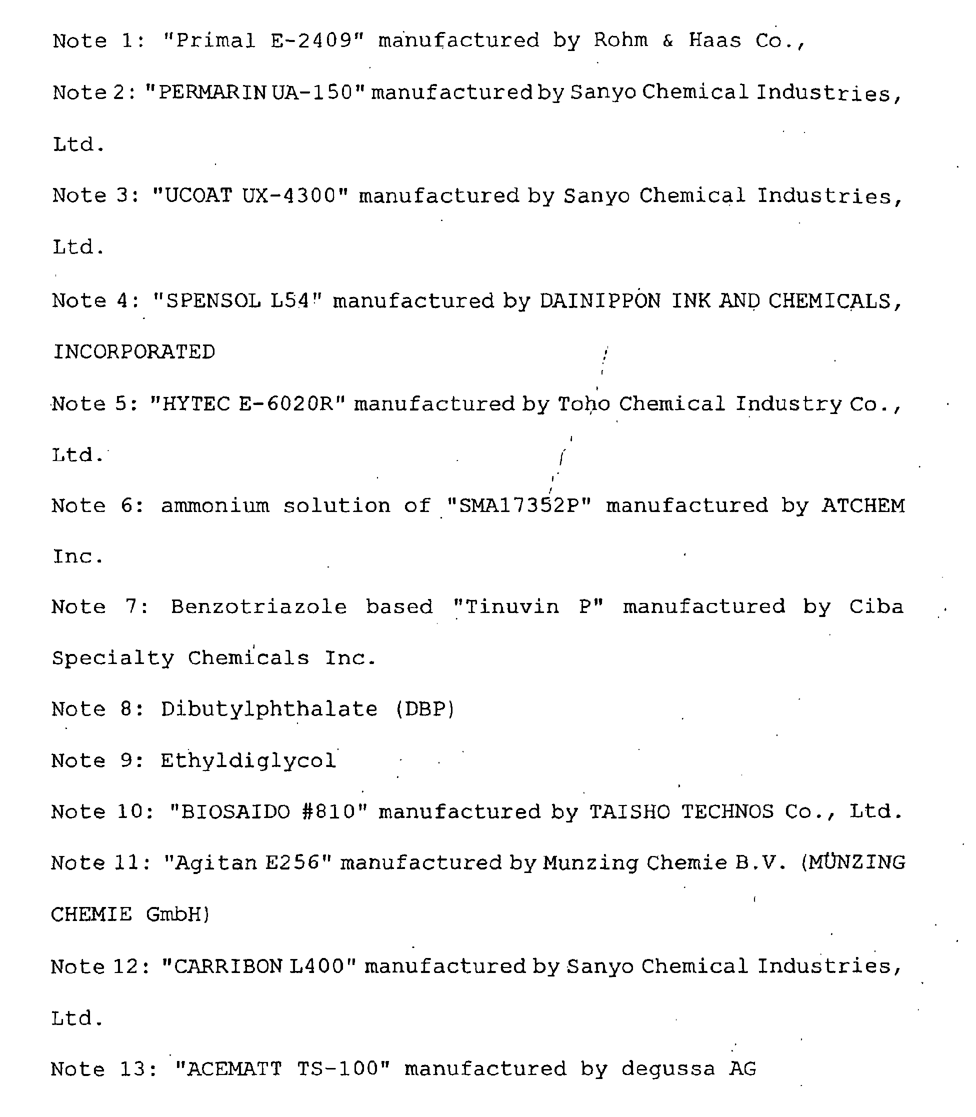

### [Evaluation Methods for Test Items]

In the test, a rubber plate to be used as a raw material of the molding member of an automobile or the like, typical of the organic structural member described above, was prepared at first. Then, the tests were conducted on the rubber plates for evaluating the properties of touching up the surface flaws, recoatability, adhesiveness, accelerated weatherability, and scratch-proof, respectively. The property of touching up the surface flaws was evaluated by rubbing the surface of the rubber plate uniformly with 400-grit sandpaper and applying a sample on the surface thereof. The recoatability was evaluated by applying a sample on the surface of the rubber plate. After drying, the surface of the rubber plate was recoated with the same sample, followed by evaluating the wettability of the surface of the rubber plate. The adhesiveness was evaluated by applying a sample on the surface of the rubber plate tomake a coating film thereon. After drying, a tape was adhered on the coating film and was then quickly peeled off. Subsequently, it was observed whether a part of the coating film was transferred to the adhesive surface of the tape or not to evaluate the adhesiveness of the coating film. The accelerated weatherability was evaluated by observing the state of a coating film on the surface of the rubber plate after continuously subjecting to a sunshine-weatherometer for 300 hours. The scratch-proof was evaluated by applying a sample on the surface of the rubber plate which was then set to a gravelometer in conformity with the standard of SAE J 400 such that a shot material (#6 crushed stones) would hit the coated surface of the rubber plate at an angle of 45°, followed by spraying the shot material (250 g) thereon at a spraying pressure of 5 kg/cm². After completing the spraying, the degree of surface flaws was visually evaluated. The results obtained by the respective tests were listed in Table 3.

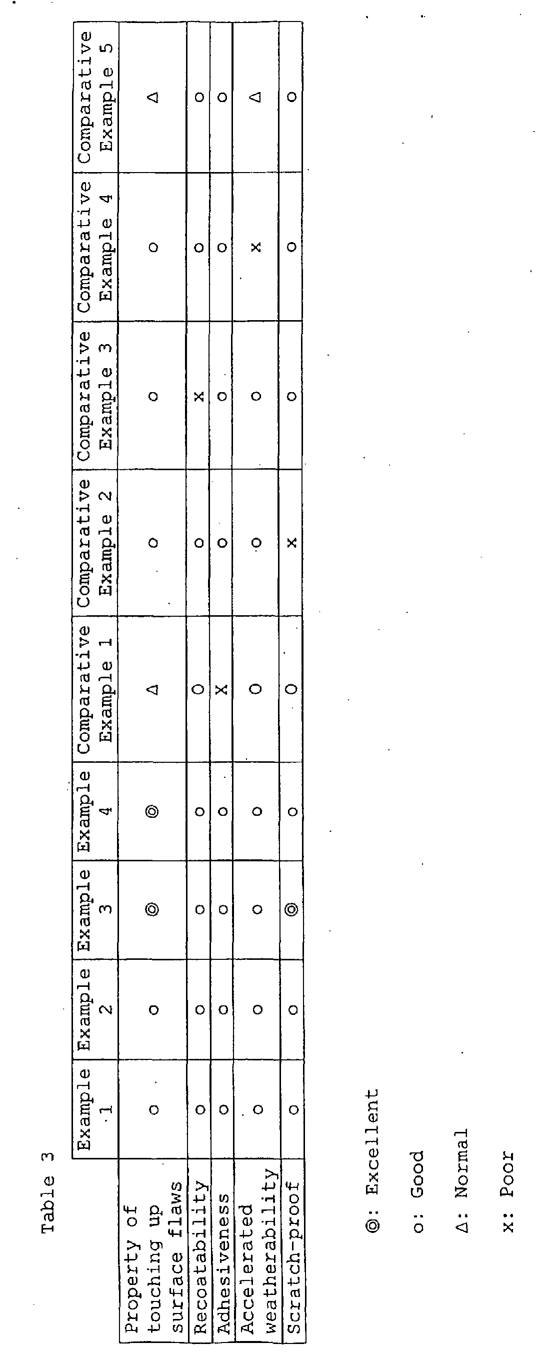

As described above, the coating material composition in accordance with the present invention can be used for an organic structural member provided for the interior or exterior of a mobile body or a stationary article such as a furnished household equipment to restore the surface of the organic structural member damaged by whitening due to acid rain, UV, or the like or by suffering from wearing and tearing to almost its original condition. That is, the coating material composition is capable of preventing the surface of the organic structural member from whitening. In addition, the coating material composition is also capable of sufficiently restoring the irregularity of the surface thereof by its repetitive coating thereon such that a coating film can be formed on the surface of the organic structural member to restore it to almost its initial good-looking appearance and protect it from wearing and tearing to keep its beautiful appearance.

## Claims

1. A coating material composition used for an organic structural member provided for the interior or exterior decoration of an article, comprising:
(a) an emulsion of an acrylic copolymer;
(b) an aqueous urethane resin;
(c) a wax emulsion;
(d) an alkaline soluble resin; and
(e) an ultraviolet-ray absorbent,
wherein the components (a), (b) , (c), (d), and (e) are provided as effective components.

2. A coating material composition according to claim 1, wherein the aqueous urethane resin (the component (b)) is an urethane dispersion.

3. A coating material composition according to claim 2, wherein the urethane in the urethane dispersion is aliphatic polyester urethane.

4. A coasting composition according to any one of claims 1 to 3, further comprising a flatting agent for fitting a gloss of a coating film to a gloss of the organic structural member.

5. A coating material composition according to any one of claims 1 to 4, wherein the article is a mobile body.

6. A coating material composition according to any one of claims 1 to 4, wherein the article is a furnished household equipment.
